# EUROPEAN PATENT SPECIFICATION

(11) **EP 2 832 259 B1**
(45) Date of publication and mention of the grant of the patent: **21.09.2016**
(21) Application number: 13178880.4
(22) Date of filing: 01.08.2013
(51) Int. Cl.: A46B 13/00, B60S 3/06, A46B 9/02, A46B 3/08

(54) **Rotary brush construction, particularly for vehicle washing system**
Drehbürstenaufbau, insbesondere für Fahrzeugwaschsystem
Construction de brosse rotative, en particulier pour système de lavage de véhicules

(43) Date of publication of application: 04.02.2015
(73) Proprietor: Morelite S.r.l., 47899 Serravalle (SM)
(72) Inventor: Bernardi Pirini, Fernandino, 46018 Sabbioneta (MN) (IT)
(74) Representative: Negrini, Elena

(56) References cited:
- JP-A- 2003 000 344
- US-A1- 2009 250 993

## Description

### BACKGROUND OF THE INVENTION

The present invention relates to a rotary brush construction, particularly for vehicle washing systems.

As is known, automatic motor-vehicle washing systems conventionally comprise washing brush assemblies.

Prior washing brush assemblies generally comprise a support tube coupled to a rotary element.

On the outer surface of the support tube are applied a plurality of flexible cleaning elements adjoining one another and coupled, at a respective end portion thereof, to said support tube, perpendicularly thereto.

The automatic cleaning and washing, for example of a motor-vehicle body, are carried out by rotatively driving the above disclosed washing brush assemblies, to cause the flexible elements thereof, held at a preset configuration by the centrifugal force generated by the rotary brush assemblies, to impact the vehicle body, through washing water and/or suitable washing water solutions or emulsions.

The above cleaning elements are made in different configurations, generally of polyethylene, in the form of threads or strips, fringes or straps.

Washing brushes made of brush straps usually comprise a plurality of strips or bands formed by partially cutting through the washing brush straps.

Said strips are arranged perpendicularly to the axis of the shaft thereon the washing brush straps are clamped.

Said straps are usually made of foamed material and the clamping elements for clamping said straps to their support may comprise rivets, bars and so on.

A main problem of the above construction is that of properly clamping the straps to their support to cause said straps to be arranged neither excessively spaced away from one another nor excessively near one another.

Another problem of prior strap clamping systems is that the strap assembling time is a comparatively long one.

Documents JP2003000344 and US-A 2007/041782 substantially disclose the preamble of claim 1.

### SUMMARY OF THE INVENTION

The aim of the present invention is to provide such a rotary washing brush construction, for vehicle washing systems, adapted to overcome the above mentioned prior art drawbacks.

Within the scope of the above mentioned aim, a main object of the invention is to provide such a washing brush construction adapted to provide an optimum distribution of the washing brush straps through the support tube surface.

Yet another main object of the present invention is to provide such a washing brush construction which is very advantageous from an economic and ecologic standpoint.

Yet another object of the present invention is to provide such a washing brush construction which, differently from prior washing brush assemblies including a support element for the washing straps, using material such as plastics, aluminium or the like materials, it does not include support elements.

Yet another object of the present invention is to provide such a washing brush construction allowing a great saving in spare part shipment.

Yet another object of the present invention is to provide such a washing brush construction which may be assembled in a very quick and easy manner.

Yet another object of the present invention is to provide such a washing brush construction which washing straps may be reliably clamped thereby preventing them from deteriorating or breaking, thereby providing a long duration washing brush strap assembly.

Yet another object of the present invention is to provide such a washing brush construction which, owing to its specifically designed structural features it is very reliable and safe in operation.

According to one aspect of the present invention, the above mentioned aim and objects, as well as yet other objects, which will become more apparent hereinafter, are achieved by a motor vehicle washing brush construction, characterized in that said washing brush construction comprises a plurality of brush elements coupled to a brush element support tube.

Each said brush element comprises a plate body so die-cut as to form thereon a plurality of cuts providing a corresponding plurality of contoured strips joined to a central band element.

Said central band element is wound on the support tube thereby the contoured strips are arranged on both sides of said central band element.

A pair of ring elements, threaded on the support tube, on both sides of the brush element, clamp said central band element so as to space the contoured strips from the support tube and cause opposite strips to be moved to one another by pairs, with a substantially 90° arrangement with respect to the support tube axis.

Preferably, a central ring element encompasses the outer surface of the central band element.

### BRIEF DESCRIPTION OF THE DRAWINGS

Further characteristics and advantages of the present invention will become more apparent hereinafter from the following disclosure of a preferred, though not exclusive, embodiment of the invention, which is illustrated, by way of an indicative, but not limitative, example in the accompanying drawings, where:

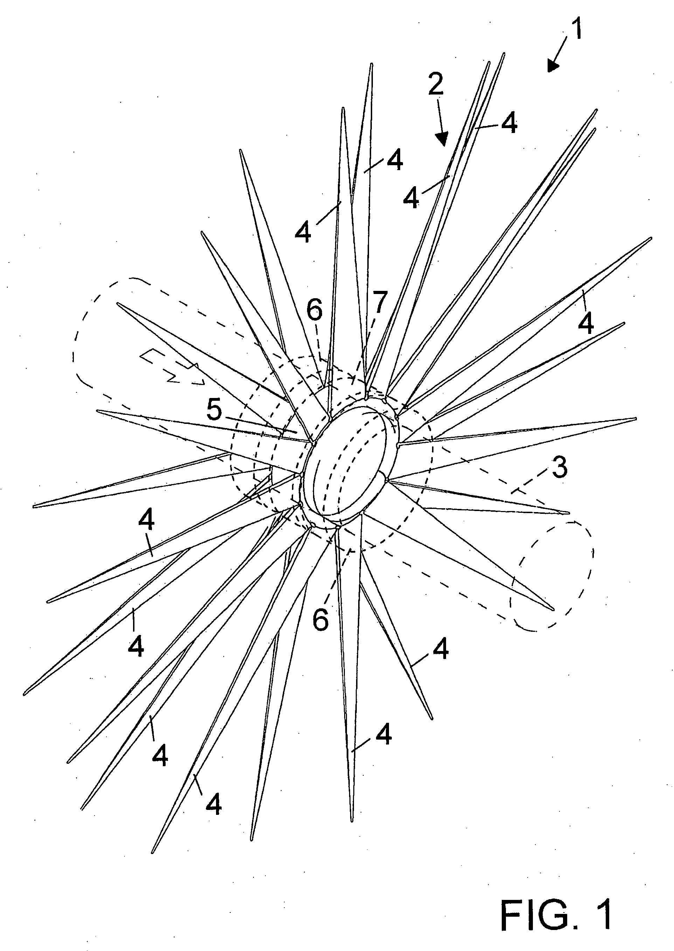

Figure 1 is a perspective view of a component element of the vehicle washing system rotary washing brush according to the present invention;

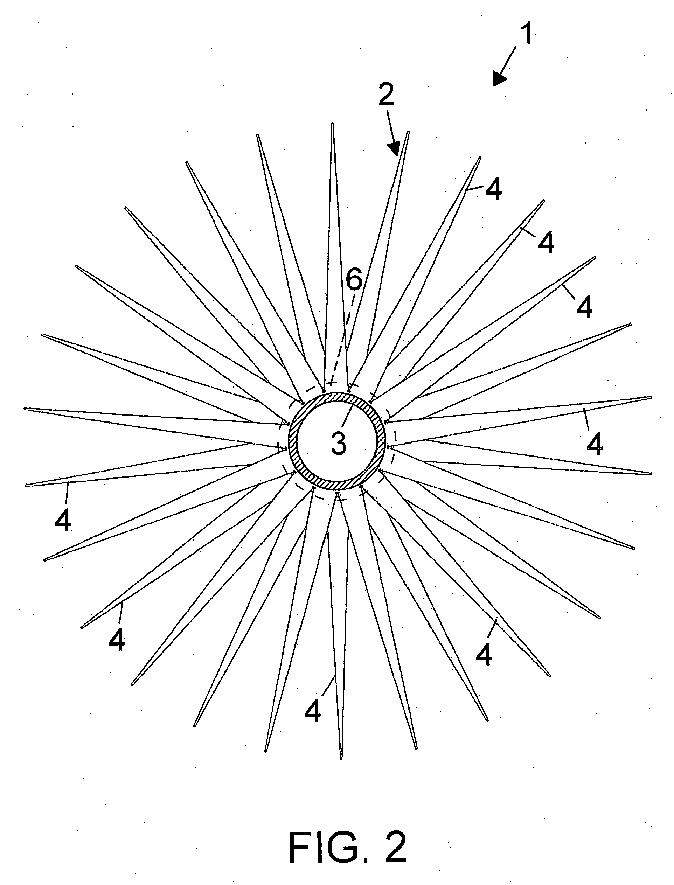

Figure 2 is a cross-sectioned view of a washing brush element of Figure 1;

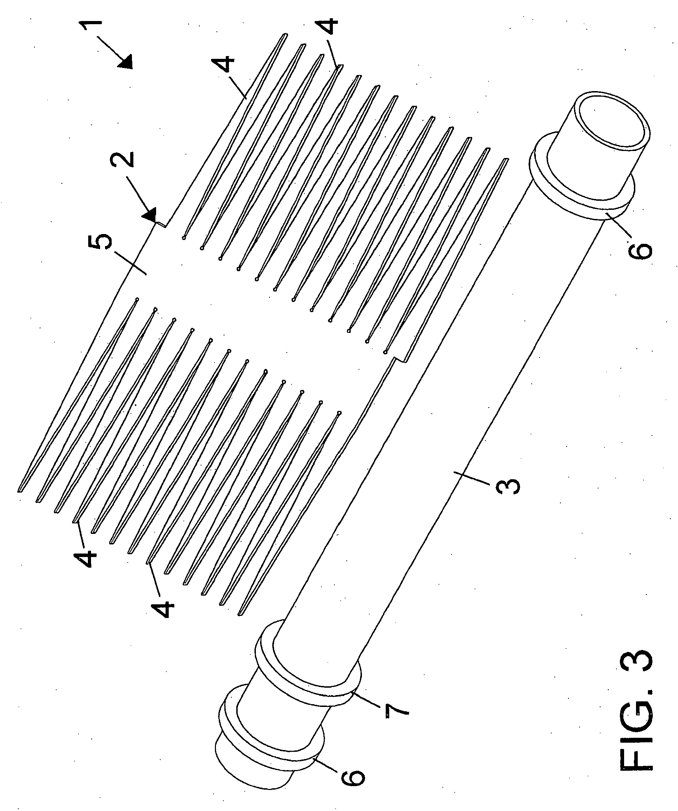

Figure 3 is a perspective view of a support tube and a washing brush element, before assembling the latter;
Figure 4 is a side elevation view showing an operating step for winding the brush element on the support tube therefor;
Figure 5 is a further side elevation view showing an operating step for compacting or pressing the brush element wound on its support tube;
Figure 6 is yet another side elevation view showing the brush element mounted on its support tube at a ready for use position; and
Figure 7 is yet another elevation view showing the washing brush construction in a use condition thereof with a plurality of washing brush elements mounted on the support tube.

### DESCRIPTION OF THE PREFERRED EMBODIMENTS

With reference to the number references of the above mentioned figures, the vehicle washing system washing brush construction according to the present invention, which has been generally indicated with reference number 1, comprises a plurality of washing brush elements 2 associated with a support tube 3 which, in turn, is mounted on suitable rotary support elements, not shown in the figures.

Each said washing brush element 2 comprises a plate-like body which may be advantageously made of a closed cell foamed plastic or a felt material.

Said plate-like body is so die-cut as to form thereon a plurality of cuts providing a corresponding plurality of contoured strips 4 joined to a central band element 5.

Said contoured strips 4 have preferably a triangular configuration.

The cut of said strips is, preferably though not necessarily, a tipped cut.

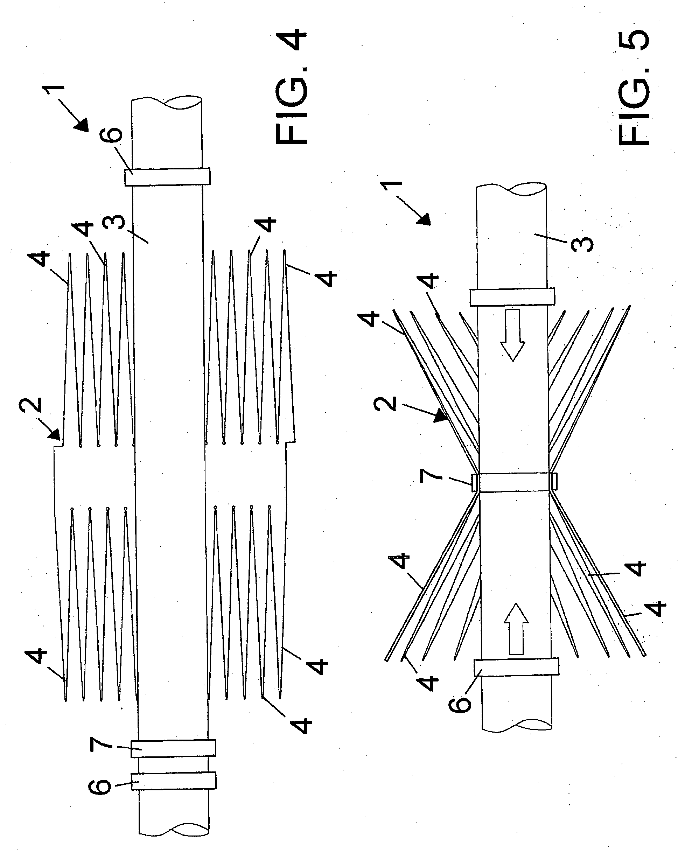

Said central band element 5 is wound on the tube 3 as to cause said contoured strips to be arranged on both sides of the central band element 5, as shown in Figure 4.

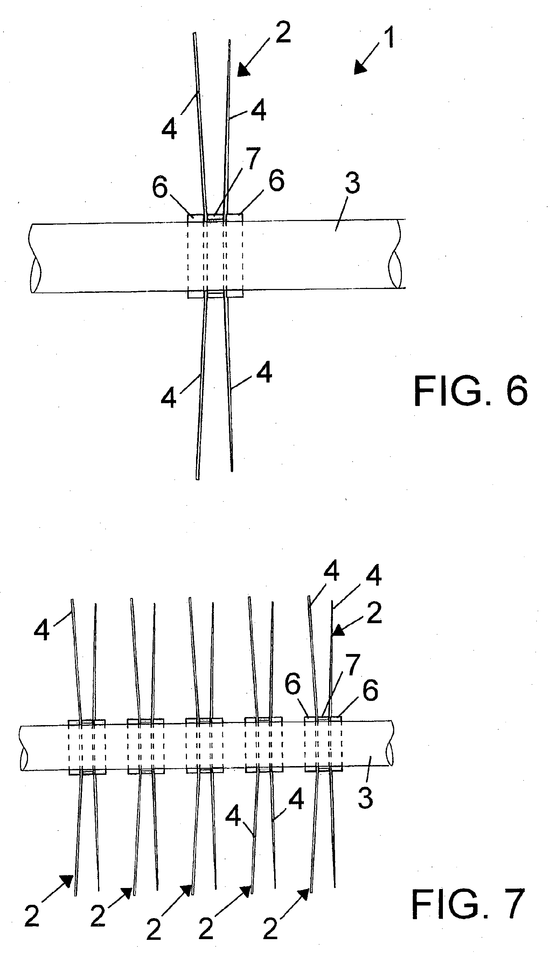

In assembling the washing brush, a pair of clamping ring elements 6 are applied on the support tube 3, on both sides of the brush element, thereby clamping or pinching said central band element 5, so as to move away the contoured strips 4 from the support tube and cause opposite strips 4 to move to one another, by pairs, thereby arranging the latter with a substantially 90° arrangement with respect to the axis of the tube 3, as shown in Figure 6.

Then, by assembling further brush elements 2, the washing brush construction 1 is completed, said washing brush construction comprising a plurality of washing brush elements applied to the support tube 3 and spaced as desired from one another.

Figure 7 shows an embodiment of the rotary washing brush construction 1, wherein the washing brush elements are spaced from one another by an amount corresponding to a distance "d" between two adjacent ring element 6.

In this connection it should be apparent that the spacing of the washing brush elements 2 may be easily changed by merely arranging the ring elements 6 at a different spacing from one another.

As above disclosed, the strips are advantageously cut by an asymmetrical type of cut.

Accordingly, upon assembling the brush element 2 on the support tube, said strips 4 will open with a spoke-wheel arrangement, because of the provision of ring elements 6 sliding thereunder.

The "spokes" of the top portion will precisely fall in the space between the bottom spokes, thereby providing a strategically quilted side surface to improve the contact tip distribution, without empty spaces therebetween.

In such a construction, three ring elements are preferably used, which are: a central ring element 7, for holding the spoke band element clamped to the tube, and two other side ring elements 6, to open said spoke band element as an umbrella, from the top and bottom portions thereof.

Said two side ring elements 6 also operate as spacer elements to set amount of material to the edge of the washing brush.

Thus, it is possible to properly control the washing brush density, by including more or less washing spokes in different operating areas.

The spacing between two adjoining ring elements, of two adjoining washing brush elements, may be changed to differently compact with one another the washing brush elements.

It has been found that the invention fully achieves the intended aim and objects.

In fact, the invention has provided a rotary washing brush construction providing an optimum distribution of the strap elements through the support tube surface, while facilitating the washing brush assembling operation.

Moreover, the inventive washing brush construction provides a firm and reliable clamping of the washing straps, of high duration, while preventing said straps from being deteriorated or prematurely broken.

Moreover, the invention also provides very important economic and ecologic advantages.

In fact, conventional washing brush assemblies include a support for the washing straps, thereby several different materials, such as plastic, aluminium or the like must be used, whereas, in the inventive washing brush, the straps are mounted on their support tube without requiring additional supports.

Furthermore, the inventive washing brush components may be replaced in the same manner thereby, by merely causing the original ring elements to slip, arranging new straps in replacement of the worn ones and reassembling the just removed ring elements.

Moreover, the present washing brush construction has small costs, both with respect to its assembling and operation.

Yet another great saving is achieved in the spare part shipment, since the spare parts comprise only the washing straps, arranged in a stacked relationship, thereby occupying a third of the volume occupied by prior preassembled bristle prior elements.

In practicing the invention, the used materials, as well as the contingent size and shapes, can be any, according to requirements.

## Claims

1. A motor vehicle washing system washing brush construction (1), comprising a plurality of washing brush elements (2) associated with a support tube (3), each said washing brush element comprising a plate body so die-cut as to form thereon a plurality of cuts providing a corresponding plurality of contoured strips (4) joined by a central band element, **characterized in that** said central band element (5) is wound on said support tube as to arrange said contoured strip on both sides of said central band element, with a pair of ring elements (6, 7) being threaded on said support tube, on both sides of said washing brush element to clamp said central band element (5) so as to move the support tube contoured strips (4) away from one another and cause opposite strips to move to one another, by pairs, thereby arranging said opposite strips (4) with a substantially 90° relationship with respect to a tube axis.

2. A rotary brush construction (1), according to claim 1, **characterized in that** said rotary brush construction comprises a central ring element (7) encompassing an outer surface of said central band element.

3. A rotary brush construction (1), according to claim 1, **characterized in that** said plate body is made of a closed cell foamed plastic or felt material.

4. A rotary brush construction (1), according to claim 1, **characterized in that** said rotary brush construction (1) comprises a plurality of brush elements (2) applied to said support tube and spaced at different spacings from one another.

5. A rotary brush construction (1), according to claim 1, **characterized in that** said plate body is so die-cut as to form thereon a plurality of cuts to provide a corresponding plurality of contoured strips (4) joined to said central band element.

6. A rotary brush construction, according to claim 1, **characterized in that** said strips (4) have a triangular shape.

7. A rotary brush construction (1), according to claim 1, **characterized in that** said strip (4) cuts are tipped cuts.

8. A rotary brush construction (1), according to claim 1, **characterized in that** said central band element is wound on said support tube (3) to arrange said contoured strips (4) on both sides of said central band element (5)

9. A rotary brush construction (1), according to claim 1, **characterized in that** said brush construction comprises a pair of ring elements (6, 7) applied to said support tube on both sides of said brush element and clamping said central band element (5) as to move away said contoured strips (4) from said support tube and cause further strips to be moved to one another by pairs thereby arranging said further strips (4) with a substantially 90° arrangement with respect to said support tube axis.

10. A rotary brush construction (1), according to claim 1, **characterized in that** said washing brush construction comprises a plurality of washing brush elements (2) applied to said support tube and spaced from one another at a set spacing.

11. A rotary brush construction (1), according to claim 1, **characterized in that** said washing brush elements (2) are spaced from one another by a spacing depending on a distance "d" between two adjoining ring elements.

12. A rotary brush construction (1), according to claim 11, **characterized in that** the spacing of said washing brush elements (2) is changed by arranging said ring elements at a different spacing from one another.

13. A rotary brush construction (1), according to claim 1, **characterized in that,** when said washing brush element (2) is mounted on said support tube (3), said strips open in a spoke width arrangement by a ring element sliding thereunder (6, 7).

14. A rotary brush construction (1), according to claim 13, **characterized in that** the spokes of the top portion precisely fall in the space between the bottom spokes, thereby providing a strategically quilted side surface to optimally distribute contact tips without empty spaces therebetween.

15. A rotary brush construction (1), according to claim 1, **characterized in that** said washing brush construction comprises three ring elements (6, 7), a central ring element (7), to hold said strap elements firmly coupled to said support tube and two side ring elements (6) to open said strap element as an umbrella from above and under said strap element, said two side ring elements (6) also operating as spacer elements to set the amount of material to the edge og the washing brush.

## Patentansprüche

1. Eine Waschbürstenkonstruktion (1) eines Kraftfahrzeugwaschsystems, umfassend:
eine Mehrzahl von Waschbürstenelementen (2), die mit einem Unterstützungsrohr (3)verbunden sind, wobei
jedes Waschbürstenelement einen Plattenkörper umfasst, der so gestanzt ist, um darauf eine Mehrzahl von Schnitten zu bilden, die eine entsprechende Mehrzahl von konturierten Streifen (4) bereitstellen, die durch ein zentrales Bandelement verbunden sind, **dadurch gekennzeichnet, dass**
das zentrale Bandelement (5) auf das Unterstützungsrohr gewickelt ist, um den konturierten Streifen auf beiden Seiten des zentralen Bandelements anzuordnen, wobei
ein Paar von Ringelementen (6, 7) auf das Unterstützungsrohr aufgeschraubt ist auf beiden Seiten des Waschbürstenelements, um das zentrale Bandelement (5) zu klemmen, um so die konturierten Streifen (4) des Unterstützungsrohrs voneinander weg zu bewegen und zu bewirken, dass sich entgegengesetzte Streifen paarweise zueinander bewegen, wodurch die entgegengesetzten Streifen (4) mit einem im Wesentlichen 90°-Verhältnis bezogen auf eine Rohrachse angeordnet sind.

2. Eine Drehbürstenkonstruktion (1) gemäß Patentanspruch 1, **dadurch gekennzeichnet, dass** die Drehbürstenkonstruktion ein zentrales Ringelement (7) aufweist, dass eine äußere Oberfläche des zentralen Bandelements einschließt.

3. Eine Drehbürstenkonstruktion (1) gemäß Patentanspruch 1, **dadurch gekennzeichnet, dass** der Plattenkörper aus einem geschlossenzelligen geschäumten Kunststoff oder Filzmaterial hergestellt ist.

4. Eine Drehbürstenkonstruktion (1) gemäß Patentanspruch 1, **dadurch gekennzeichnet, dass** die Drehbürstenkonstruktion (1) eine Mehrzahl von Bürstenelementen (2) umfasst, die am Unterstützungsrohr angebracht sind und mit unterschiedlichen Abständen voneinander beabstandet sind.

5. Eine Drehbürstenkonstruktion (1) gemäß Patentanspruch 1, **dadurch gekennzeichnet, dass** der Plattenkörper so gestanzt ist, um darauf eine Mehrzahl von Schnitten zu bilden, um eine entsprechende Mehrzahl von konturierten Streifen (4) bereitzustellen, die mit dem zentralen Bandelement verbunden sind.

6. Eine Drehbürstenkonstruktion (1) gemäß Patentanspruch 1, **dadurch gekennzeichnet, dass** die Streifen (4) eine Dreiecksform aufweisen.

7. Eine Drehbürstenkonstruktion (1) gemäß Patentanspruch 1, **dadurch gekennzeichnet, dass** die Schnitte des Streifens (4) schräg verlaufende Schnitte sind.

8. Eine Drehbürstenkonstruktion (1) gemäß Patentanspruch 1, **dadurch gekennzeichnet, dass** das zentrale Bandelement auf das Unterstützungsrohr (3) gewickelt ist, um die konturierten Streifen (4) auf beiden Seiten des zentralen Bandelements (5) anzuordnen.

9. Eine Drehbürstenkonstruktion (1) gemäß Patentanspruch 1, **dadurch gekennzeichnet, dass** die Bürstenkonstruktion ein Paar von Ringelementen (6, 7) aufweist, die am Unterstützungsrohr auf beiden Seiten des Bürstenelements angebracht sind und das zentrale Bandelement (5) klemmen, um die konturierten Streifen (4) von dem Unterstützungsrohr weg zu bewegen und zu bewirken, dass weitere Streifen paarweise zueinander bewegt werden, wodurch die weiteren Streifen (4) mit einer im Wesentlichen 90°-Anordnung bezogen auf die Unterstützungsrohrachse angeordnet werden.

10. Eine Drehbürstenkonstruktion (1) gemäß Patentanspruch 1, **dadurch gekennzeichnet, dass** die Waschbürstenkonstruktion eine Mehrzahl von Waschbürstenelementen (2) aufweist, die am Unterstützungsrohr angebracht sind und voneinander in einem vorgegebenen Abstand beabstandet sind.

11. Eine Drehbürstenkonstruktion (1) gemäß Patentanspruch 1, **dadurch gekennzeichnet, dass** die Waschbürstenelemente (2) beabstandet sind voneinander durch einen Abstand, der von einem Abstand "d" zwischen zwei benachbarten Ringelementen abhängt.

12. Eine Drehbürstenkonstruktion (1) gemäß Patentanspruch 11, **dadurch gekennzeichnet, dass** der Abstand der Waschbürstenelemente (2) durch Anordnen der Ringelemente in einem unterschiedlichen Abstand voneinander verändert wird.

13. Eine Drehbürstenkonstruktion (1) gemäß Patentanspruch 1, **dadurch gekennzeichnet, dass**, wenn das Waschbürstenelement (2) auf dem Unterstützungsrohr (3) befestigt ist, die Streifen in einer Speichen-breiten Anordnung durch ein darunter gleitendes Ringelement (6, 7) öffnen.

14. Eine Drehbürstenkonstruktion (1) gemäß Patentanspruch 13, **dadurch gekennzeichnet, dass** die Speichen des oberen Bereichs genau in den Raum zwischen den Bodenspeichen fallen, wodurch eine strategisch gesteppte Seitenoberfläche bereitgestellt ist, um Kontaktspitzen ohne Leerräume dazwischen optimal zu verteilen.

15. Eine Drehbürstenkonstruktion (1) gemäß Patentanspruch 1, **dadurch gekennzeichnet, dass** die Waschbürstenkonstruktion drei Ringelemente (6, 7) umfasst, ein zentrales Ringelement (7), um die Streifenelemente fest gekoppelt am Unterstützungsrohr zu halten, sowie zwei Seitenringelemente (6), um das Streifenelement wie einen Regenschirm von oben und unterhalb des Streifenelements zu öffnen, wobei die zwei Seitenringelemente (6) ebenso als Abstandselemente arbeiten, um die Materialmenge bis zum Rand der Waschbürste festzulegen.

## Revendications

1. Construction de brosse (1) de lavage de système de lavage de véhicules à moteur, comprenant une pluralité d'éléments brosses de lavage (2) associés à un tube de support (3), chaque élément brosse de lavage précité comprenant un corps en plaque découpé à la forme de façon à former sur celui-ci une pluralité de découpes fournissant une pluralité correspondante de franges profilées (4) reliées par un élément central en bande, **caractérisé par le fait que** ledit élément central en bande (5) est enroulé sur ledit tube de support de façon à disposer ladite frange profilée sur les deux côtés dudit élément central en bande, avec une paire d'éléments bagues (6, 7) filetés sur ledit tube de support, sur les deux côtés dudit élément brosse de lavage pour serrer ledit élément central en bande (5) de façon à éloigner les franges profilées de tube de support (4) les unes des autres et à amener des franges opposées à se rapprocher les unes des autres, par paires, plaçant ainsi lesdites franges opposées (4) avec une relation sensiblement à 90° par rapport à un axe de tube.

2. Construction de brosse rotative (1), selon la revendication 1, **caractérisée par le fait que** ladite construction de brosse rotative comprend un élément bague central (7) entourant une surface externe dudit élément central en bande.

3. Construction de brosse rotative (1), selon la revendication 1, **caractérisée par le fait que** ledit corps en plaque est fait d'une matière plastique alvéolaire à cellules fermées ou d'une matière de feutre.

4. Construction de brosse rotative (1), selon la revendication 1, **caractérisée par le fait que** ladite construction de brosse rotative (1) comprend une pluralité d'éléments brosses (2) appliqués audit tube de support et espacés à différents espacements les uns des autres.

5. Construction de brosse rotative (1), selon la revendication 1, **caractérisée par le fait que** ledit corps en plaque est découpé à la forme de façon à former sur celui-ci une pluralité de découpes pour fournir une pluralité correspondante de franges profilées (4) reliées audit élément central en bande.

6. Construction de brosse rotative (1), selon la revendication 1, **caractérisée par le fait que** lesdites franges (4) ont une forme triangulaire.

7. Construction de brosse rotative (1), selon la revendication 1, **caractérisée par le fait que** lesdites découpes de frange (4) sont des découpes inclinées.

8. Construction de brosse rotative (1), selon la revendication 1, **caractérisée par le fait que** ledit élément central en bande est enroulé sur ledit tube de support (3) pour placer lesdites franges profilées (4) sur les deux côtés dudit élément central en bande (5).

9. Construction de brosse rotative (1), selon la revendication 1, **caractérisée par le fait que** ladite construction de brosse comprend une paire d'éléments bagues (6, 7) appliqués audit tube de support sur les deux côtés dudit élément brosse et serrant ledit élément central en bande (5) de façon à éloigner lesdites franges profilées (4) vis-à-vis dudit tube de support et à amener d'autres franges à se rapprocher les unes des autres par paires, plaçant ainsi lesdites autres franges (4) avec un agencement sensiblement à 90° par rapport audit axe de tube de support.

10. Construction de brosse rotative (1), selon la revendication 1, **caractérisée par le fait que** ladite construction de brosse de lavage comprend une pluralité d'éléments brosses de lavage (2) appliqués audit tube de support et espacés les uns des autres à un espacement défini.

11. Construction de brosse rotative (1), selon la revendication 1, **caractérisée par le fait que** lesdits éléments brosses de lavage (2) sont espacés les uns des autres par un espacement dépendant d'une distance « d » entre deux éléments bagues adjacents.

12. Construction de brosse rotative (1), selon la revendication 11, **caractérisée par le fait que** l'espacement desdits éléments brosses de lavage (2) est changé en plaçant lesdits éléments bagues à un espacement différent les uns des autres.

13. Construction de brosse rotative (1), selon la revendication 1, **caractérisée par le fait que**, lorsque ledit élément brosse de lavage (2) est monté sur ledit tube de support (3), lesdites franges s'ouvrent en un agencement, en largeur, à rayons, par un élément bague (6, 7) coulissant sous celles-ci.

14. Construction de brosse rotative (1), selon la revendication 13, **caractérisée par le fait que** les rayons de la partie supérieure s'étendent précisément dans l'espace entre les rayons inférieurs, fournissant ainsi une surface latérale matelassée de façon stratégique pour répartir de façon optimale les pointes de contact sans espaces vides entre elles.

15. Construction de brosse rotative (1), selon la revendication 1, **caractérisée par le fait que** ladite construction de brosse de lavage comprend trois éléments bagues (6, 7), un élément bague central (7), pour maintenir lesdits éléments franges fermement couplés audit tube de support, et deux éléments bagues latéraux (6) pour ouvrir ledit élément frange comme un parapluie depuis le dessus et le dessous dudit élément frange, lesdits deux éléments bagues latéraux (6) agissant également comme éléments d'espacement pour définir la quantité de matériau sur le bord de la brosse de lavage.
